# EUROPEAN PATENT APPLICATION

(11) **EP 4 810 708 A1**
(43) Date of publication of application: **23.09.2026**
(21) Application number: 26161793.0
(22) Date of filing: 02.03.2026
(51) Int. Cl.: D06P 5/00, D06P 1/52, D06P 5/30, D06P 1/673

(54) **INK JET RECORDING METHOD**

(30) Priority: 03.03.2025 JP 2025032664
(71) Applicant: Seiko Epson Corporation, Tokyo 160-8801 (JP)
(72) Inventor: AOKI, Kazuto, Suwa-shi, 392-8502 (JP); YOKOYAMA, Naoki, Suwa-shi, 392-8502 (JP)
(74) Representative: Lewis Silkin LLP

(57) **Abstract**

An ink jet recording method includes: a reaction liquid attaching step of attaching a reaction liquid containing an aggregating agent and water to fabric by an ink jet method; a transparent ink attaching step of attaching a transparent ink composition containing water and anionic resin particles aggregated by the aggregating agent to the fabric by an ink jet method; and a metal foil attaching step of attaching metal foil to a region to which the transparent ink composition is attached, in which the difference in landing time on the same area of the fabric between the reaction liquid attaching step and the transparent ink attaching step falls within 60 seconds.

## Description

The present application is based on, and claims priority from JP Application Serial Number 2025-032664, filed March 3, 2025, the disclosure of which is hereby incorporated by reference herein in its entirety.

### BACKGROUND

### 1. Technical Field

The present disclosure relates to an ink jet recording method.

### 2. Related Art

An ink jet recording method enables recording of high-definition images with a relatively simple device and is developing rapidly in various fields. For example, a method of forming a metallic image having metallic texture has been studied, and a recording method in which an adhesive layer is formed by ejecting an adhesive liquid onto a recording medium using an ink jet method, a sheet on which metal foil (for example, an aluminum vapor-deposited film) is formed is brought into contact with the adhesive layer, and the metal foil is transferred to the medium (adhesive layer) has been known.

JP-A-2013-177702 describes a textile printing method including a pretreatment step of applying a pretreatment liquid to a printing surface of fabric, an adhesive liquid application step of ejecting an adhesive liquid to the printing surface to form an adhesive layer after the pretreatment step, and a metal foil transfer step of bringing a sheet having metal foil formed thereon into contact with the adhesive layer to transfer the metal foil to the adhesive layer.

However, color developability and rubbing fastness of a metallic luster image obtained also depend on the flatness of a surface of fabric to which the image is transferred, and sufficient color developability (degree of luster) or rubbing fastness of a metallic luster image obtained is not achieved only by simply applying an adhesive liquid to the fabric.

### SUMMARY

According to an aspect of the present disclosure, there is provided an ink jet recording method including: a reaction liquid attaching step of attaching a reaction liquid containing an aggregating agent and water to fabric by an ink jet method; a transparent ink attaching step of attaching a transparent ink composition containing water and anionic resin particles aggregated by the aggregating agent to the fabric by an ink jet method; and a metal foil attaching step of attaching metal foil to a region to which the transparent ink composition is attached, in which a difference in landing time on the same area of the fabric between the reaction liquid attaching step and the transparent ink attaching step falls within 60 seconds.

### BRIEF DESCRIPTION OF THE DRAWINGS

FIG. 1 is a perspective view of a serial printer that may be used in a recording method according to an embodiment.
FIG. 2 is a schematic side view of a line printer that may be used in the recording method according to the embodiment.
FIG. 3 is Table 1 showing compositions and evaluation results of compositions used in Examples and Comparative Examples.
FIG. 4 is Table 2 showing conditions and evaluation results of Examples and Comparative Examples.

### DESCRIPTION OF EMBODIMENTS

Embodiments of the present disclosure will be described. The embodiments described below describe examples of the present disclosure. The present disclosure is not limited to the following embodiments, and includes various modifications implemented within a range not changing a gist of the present disclosure. It should be noted that not all of the configurations described below are essential configurations of the present disclosure.

In the present specification, a numerical range indicated by using "to" means a range including numerical values described before and after "to" as a lower limit value and an upper limit value.

In the present specification, "(meth)acrylic" means acrylic or methacrylic, and "(meth)acrylate" means acrylate or methacrylate.

### 1. Ink jet recording method

An ink jet recording method according to an embodiment includes: a reaction liquid attaching step of attaching a reaction liquid containing an aggregating agent and water to fabric by an ink jet method; a transparent ink attaching step of attaching a transparent ink composition containing water and anionic resin particles aggregated by the aggregating agent to the fabric by an ink jet method; and a metal foil attaching step of attaching metal foil to a region to which the transparent ink composition is attached. The difference in landing time on the same area of the fabric between the reaction liquid attaching step and the transparent ink attaching step falls within 60 seconds.

### 1. 1. Reaction liquid attaching step

In the reaction liquid attaching step, a reaction liquid containing an aggregating agent and water is attached to fabric by an ink jet method. The reaction liquid will be described first, and the fabric and the ink jet method will be described below.

### 1. 1. 1. Reaction liquid

The reaction liquid used in the reaction liquid attaching step contains an aggregating agent for aggregating components in ink, and water. Each component contained in the reaction liquid will be described.

### 1. 1. 1. 1. Aggregating agent

The reaction liquid contains an aggregating agent that aggregates components in ink. The aggregating agent has a function to act on dispersibility of components such as the anionic resin particles contained in the transparent ink composition, and a coloring material and resin particles contained in a colored ink composition, thereby aggregating at least one of these components. The degree of aggregation of a dispersion due to the aggregating agent varies depending on the respective types of the aggregating agent and a target, and can be adjusted. Due to such an aggregation action, the components contained in the transparent ink composition are aggregated, and the components in the transparent ink composition are easily held in the vicinity of a surface even on fabric which is a water-absorptive recording medium, and color developability of an image or fixability of an image can be enhanced, for example.

The reaction liquid preferably contains, for example, one or more selected from an organic acid, a polyvalent metal salt, and a cationic polymer as the aggregating agent. When such an aggregating agent is used, the aggregating agent easily acts on dispersibility of components such as the anionic resin particles contained in the transparent ink composition and the coloring material and the resin particles contained in the colored ink composition, and rubbing fastness and color developability may be more excellent. When the aggregating agent is one or more selected from an organic acid and a polyvalent metal salt, printed matter having more favorable rubbing fastness can be obtained. The aggregating agent is particularly preferably an organic acid. In a case where an organic acid is used as the aggregating agent, aggregability is more excellent, the components in the transparent ink composition are easily held in the vicinity of a surface of fabric, and color developability (lustrousness) and texture can be made more favorable.

Preferred examples of the organic acid include poly(meth)acrylic acid, formic acid, acetic acid, propionic acid, glycolic acid, oxalic acid, malonic acid, malic acid, maleic acid, ascorbic acid, succinic acid, glutaric acid, adipic acid, fumaric acid, citric acid, tartaric acid, lactic acid, pyruvic acid, pyrrolidone carboxylic acid, pyrone carboxylic acid, pyrrole carboxylic acid, furan carboxylic acid, pyridine carboxylic acid, coumaric acid, thiophene carboxylic acid, nicotinic acid, derivatives of these compounds, and salts thereof. The organic acid may be used alone or in combination of two or more kinds thereof. Salts of organic acids which are metal salts are included in the following metal salts.

The polyvalent metal salt is a compound composed of a divalent or higher valent metal ion and an anion. Examples of the divalent or higher valent metal ion include ions of calcium, magnesium, copper, nickel, zinc, barium, aluminum, titanium, strontium, chromium, cobalt, iron, and the like. Among the metal ions constituting the polyvalent metal salt, of at least one of a calcium ion and a magnesium ion is preferable from the viewpoint that aggregability of ink components is excellent.

The anion constituting the polyvalent metal salt is an inorganic ion or an organic ion. Examples of such an inorganic ion include a chlorine ion, a bromine ion, an iodine ion, a formate ion, a nitrate ion, a sulfate ion, and a hydroxide ion. Examples of the organic ion include an organic acid ion, and examples thereof include a carboxylate ion.

Specific examples of the polyvalent metal salt include calcium carbonate such as heavy calcium carbonate and light calcium carbonate, calcium formate, calcium nitrate, calcium chloride, calcium sulfate, magnesium sulfate, calcium hydroxide, magnesium chloride, magnesium carbonate, barium sulfate, barium chloride, zinc carbonate, zinc sulfide, aluminum silicate, calcium silicate, magnesium silicate, copper nitrate, calcium acetate, magnesium acetate, aluminum acetate, calcium propionate, magnesium propionate, aluminum propionate, calcium lactate, magnesium lactate, and aluminum lactate. The polyvalent metal salt may be used alone or in combination of two or more kinds thereof.

Among these, at least one of magnesium sulfate, calcium formate, calcium nitrate, aluminum lactate, and calcium propionate is preferable from the viewpoint of obtaining sufficient solubility in water. These metal salts may have water of hydration in the raw material form, such as magnesium sulfate heptahydrate and calcium nitrate tetrahydrate.

The cationic polymer means a polymer compound having a cationic group. Examples of the cationic polymer include a cationic urethane resin, a cationic olefin resin, a cationic amine-based resin, and a cationic amide-based resin.

The cationic amine-based resin may be a resin having an amino group, and examples thereof include an allylamine resin, a polyamine resin, and a quaternary ammonium salt polymer.

Examples of the allylamine resin include a resin having a structure derived from an allyl group in the main skeleton of the resin. Examples of the polyamine resin include a resin having an amino group in the main skeleton of the resin. Examples of the quaternary ammonium salt polymer include a resin having a quaternary ammonium salt in the structure. Among the cationic polymers, the cationic amine-based resin is not only excellent in reactivity but also easily available, and thus is preferable.

The aggregating agent may be used alone or in combination of two or more kinds thereof.

The lower limit of the content of the aggregating agent is, for example, preferably 0.5% by mass or more, more preferably 1% by mass or more, still more preferably 2% by mass or more, and particularly preferably 3% by mass or more, with respect to the total amount of the reaction liquid, from the viewpoint of more excellent color developability and suppression of permeation into the back side of fabric.

In addition, the upper limit of the content of the aggregating agent is not particularly limited, but is, for example, preferably 20% by mass or less, more preferably 15% by mass or less, still more preferably 10% by mass or less, particularly preferably 8% by mass or less, and more particularly preferably 6% by mass or less, with respect to the total amount of the reaction liquid.

In particular, it is preferable that the aggregating agent contain the organic acid, and the organic acid be contained in an amount of 1% to 6% by mass, more preferably 1% to 5% by mass, and even more preferably 2% to 4% by mass, with respect to the total amount of the reaction liquid. In this case, the transparent ink composition can be more effectively aggregated, and color developability (metallic luster), texture, and rubbing fastness tend to be more excellent.

### 1. 1. 1. 2. Water

The reaction liquid contains water. Examples of water include pure water such as ion-exchanged water, ultrafiltered water, reverse osmosis water, and distilled water, and water having reduced ionic impurities, such as ultrapure water. When water sterilized through ultraviolet irradiation, addition of hydrogen peroxide, or the like is used, generation of bacterium or fungi when the reaction liquid is stored for a long term can be reduced.

A content of water is preferably 40% by mass or more, further preferably 45% by mass or more, more preferably 50% by mass or more, and particularly preferably 60% by mass or more, with respect to the total amount of the reaction liquid. The upper limit of the content of water is not particularly limited and, for example, preferably 90% by mass or less, further preferably 85% by mass or less, and more preferably 80% by mass or less, with respect to the total amount of the reaction liquid.

### 1. 1. 1. 3. Other components

### Organic solvent

The reaction liquid may contain an organic solvent. Examples of the organic solvent include esters, alkylene glycol ethers, cyclic esters, amides, alcohols, polyhydric alcohols, and the like.

Examples of the esters include glycol monoacetates such as ethylene glycol monomethyl ether acetate, ethylene glycol monoethyl ether acetate, ethylene glycol monobutyl ether acetate, diethylene glycol monomethyl ether acetate, diethylene glycol monoethyl ether acetate, diethylene glycol monobutyl ether acetate, propylene glycol monomethyl ether acetate, dipropylene glycol monomethyl ether acetate, and methoxybutyl acetate; and glycol diesters such as ethylene glycol diacetate, diethylene glycol diacetate, propylene glycol diacetate, dipropylene glycol diacetate, propionate ethylene glycol acetate, butyrate ethylene glycol acetate, butyrate diethylene glycol acetate, propionate diethylene glycol acetate, butyrate diethylene glycol acetate, propionate propylene glycol acetate, butyrate propylene glycol acetate, butyrate dipropylene glycol acetate, and propionate dipropylene glycol acetate.

The alkylene glycol ethers may be alkylene glycol monoethers or diethers, and are preferably alkyl ethers. Specific examples include alkylene glycol monoalkyl ethers such as ethylene glycol monomethyl ether, ethylene glycol monoethyl ether, ethylene glycol monoisopropyl ether, ethylene glycol monobutyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monomethyl ether, tetraethylene glycol monoethyl ether, tetraethylene glycol monobutyl ether, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, dipropylene glycol monobutyl ether, and tripropylene glycol monobutyl ether; and alkylene glycol dialkyl ethers such as ethylene glycol dimethyl ether, ethylene glycol diethyl ether, ethylene glycol dibutyl ether, diethylene glycol dimethyl ether, diethylene glycol diethyl ether, diethylene glycol dibutyl ether, diethylene glycol methyl ethyl ether, diethylene glycol methyl butyl ether, triethylene glycol dimethyl ether, triethylene glycol diethyl ether, triethylene glycol dibutyl ether, triethylene glycol methyl butyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, dipropylene glycol diethyl ether, and tripropylene glycol dimethyl ether.

Examples of the cyclic esters include cyclic esters (lactones) such as β-propiolactone, γ-butyrolactone, δ-valerolactone, ε-caprolactone, β-butyrolactone, β-valerolactone, γ-valerolactone, β-hexanolactone, γ-hexanolactone, δ-hexanolactone, β-heptanolactone, γ-heptanolactone, δ-heptanolactone, ε-heptanolactone, γ-octanolactone, δ-octanolactone, ε-octanolactone, δ-nonalactone, ε-nonalactone, and ε-decanolactone; and compounds in which a hydrogen of a methylene group adjacent to a carbonyl group thereof is substituted with an alkyl group having 1 to 4 carbon atoms.

Examples of the amides include cyclic amides and acyclic amides. Examples of the acyclic amides include alkoxyalkylamides.

Examples of the cyclic amides include lactams. Examples of the lactams include pyrrolidones such as 2-pyrrolidone, 1-methyl-2-pyrrolidone, 1-ethyl-2-pyrrolidone, 1-propyl-2-pyrrolidone, and 1-butyl-2-pyrrolidone.

Examples of the alkoxyalkylamides include 3-methoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-dimethylpropionamide, 3-n-butoxy-N,N-diethylpropionamide, 3-n-butoxy-N,N-methylethylpropionamide, 3-n-propoxy-N,N-dimethylpropionamide, 3-n-propoxy-N,N-diethylpropionamide, 3-n-propoxy-N,N-methylethylpropionamide, 3-iso-propoxy-N,N-dimethylpropionamide, 3-iso-propoxy-N,N-diethylpropionamide, 3-iso-propoxy-N,N-methylethylpropionamide, 3-tert-butoxy-N,N-dimethylpropionamide, 3-tert-butoxy-N,N-diethylpropionamide, 3-tert-butoxy-N,N-methylethylpropionamide, and N,N-dimethylisobutyramide.

Examples of the alcohols include a compound in which one hydrogen atom of an alkane is substituted with a hydroxy group. The alkane has preferably 10 or less carbon atoms, more preferably 6 or less carbon atoms, and even more preferably 3 or less carbon atoms. The number of carbon atoms of the alkane is 1 or more, and is preferably 2 or more. The alkane may be a linear type or a branched type. Examples of the alcohols include methanol, ethanol, n-propyl alcohol, iso-propyl alcohol, n-butanol, 2-butanol, tert-butanol, iso-butanol, n-pentanol, 2-pentanol, 3-pentanol, tert-pentanol, 2-phenoxy ethanol, benzyl alcohol, and phenoxy propanol.

Polyhydric alcohols each have two or more hydroxy groups in a molecule. The polyhydric alcohols can be classified into, for example, alkanediols and polyols.

Examples of the alkanediols include a compound in which an alkane is substituted with two hydroxy groups. Examples of the alkanediols include 1,2-alkanediol, that is a general term for compounds in which hydrogen atoms at the 1-position and 2-position of an alkane are substituted with hydroxy groups, and other alkanediols other than 1,2-alkanediol.

Examples of the 1,2-alkanediol include ethylene glycol, 1,2-propanediol (propylene glycol), 1,2-butanediol (1,2BD), 1,2-pentanediol (1,2PD), 1,2-hexanediol (1,2HD), 1,2-heptanediol, 1,2-octanediol, 1,2-nonanediol, 1,2-decanediol, 3-methyl-1,2-butanediol, 3-methyl-1,2-pentanediol, 4-methyl-1,2-pentanediol, 3,4-dimethyl-1,2-pentanediol, 3-ethyl-1,2-pentanediol, 4-ethyl-1,2-pentanediol, 3-methyl-1,2-hexanediol, 4-methyl-1,2-hexanediol, 5-methyl-1,2-hexanediol, 3,4-dimethyl-1,2-hexanediol, 3,5-dimethyl-1,2-hexanediol, 4,5-dimethyl-1,2-hexanediol, 3-ethyl-1,2-hexanediol, 4-ethyl-1,2-hexanediol, and 3-ethyl-4-methyl-1,2-hexanediol.

Examples of other alkanediols include 1,3-propanediol, 1,3-butylene glycol (also known as 1,3-butanediol), 1,4-butanediol, 2,3-butanediol, 1,5-pentanediol, 2,4-pentanediol, 2-methyl-1,3-propanediol, 3-methyl-1,3-butanediol, 3-methyl-1,5-pentanediol, 2-ethyl-1,3-hexanediol, 2-methyl-1,3-pentanediol, 3-methyl-1,5-pentanediol, 2-methylpentane-2,4-diol, 1,6-hexanediol, 2-ethyl-2-methyl-1,3-propanediol, and 2-methyl-2-propyl-1,3-propanediol.

Examples of the polyols include a condensate in which two or more alkanediol molecules are intermolecularly condensed through hydroxy groups, and a compound having three or more hydroxy groups.

Examples of the condensate in which two or more alkanediol molecules are intermolecularly condensed through hydroxy groups include dialkylene glycols such as diethylene glycol and dipropylene glycol, and trialkylene glycols such as triethylene glycol and tripropylene glycol.

The compound having three or more hydroxy groups is a compound having an alkane or polyether structure as a skeleton and having three or more hydroxy groups. Examples of the compound having three or more hydroxy groups include glycerin, trimethylolethane, trimethylolpropane, 1,2,5-hexanetriol, 1,2,6-hexanetriol, pentaerythritol, and polyoxypropylenetriol.

The organic solvent may be used alone or in combination of two or more kinds thereof.

The organic solvent preferably includes an alkanediol, more preferably includes 1,2-alkanediol, and particularly preferably includes propylene glycol among the examples. When the organic solvent includes these solvents, color developability and suppression of permeation into the back side of fabric may be more excellent.

A content of the organic solvent is preferably 5% to 50% by mass, more preferably 10% to 40% by mass, further preferably 15% to 35% by mass, and particularly preferably 20% to 30% by mass with respect to the total amount of the reaction liquid. When the content of the organic solvent is within the above ranges, color developability and suppression of permeation into the back side of fabric may be more excellent.

### Surfactant

The reaction liquid may contain a surfactant. The surfactant can be used to reduce the surface tension of the reaction liquid, for example, to adjust and improve permeability of fabric. As the surfactant, any of a nonionic surfactant, an anionic surfactant, a cationic surfactant, or an amphoteric surfactant can be used, and these surfactants may also be used in combination. Among these surfactants, an acetylene-based surfactant (acetylene glycol-based surfactant), a silicone-based surfactant, and a fluorine-based surfactant can be more preferably used, and the acetylene-based surfactant can be further preferably used.

The acetylene-based surfactant (acetylene glycol-based surfactant) is not particularly limited, and examples thereof include surfynol 104, 104E, 104H, 104A, 104BC, 104DPM, 104PA, 104PG-50, 1045, 420, 440, 465, 485, SE, SE-F, 504, 61, DF37, CT111, CT121, CT131, CT136, TG, GA, and DF110D (product names, manufactured by Air Products and Chemicals Inc), OLFINE B, Y, P, A, STG, SPC, E1004, E1010, PD-001, PD-002W, PD-003, PD-004, PD-005, EXP.4001, EXP.4036, EXP.4051, EXP.4123, EXP.4200, EXP.4300, AF-103, AF-104, AK-02, SK-14, and AE-3 (product names, manufactured by Nissin Chemical Industry Co., Ltd.), Acetylenol E00, E00P, E40, and E100 (product names, manufactured by Kawaken Fine Chemicals Co., Ltd.).

The silicone-based surfactant is not particularly limited and preferable examples thereof include a polysiloxane-based compound. The polysiloxane-based compound is not particularly limited, and examples thereof include a polyether-modified organosiloxane. Examples of commercially available products of the polyether-modified organosiloxane include BYK-306, BYK-307, BYK-333, BYK-341, BYK-345, BYK-346, and BYK 348 (product names, manufactured by BYK Japan KK), KF-351A, KF-352A, KF-353, KF-354L, KF-355A, KF-615A, KF-945, KF-640, KF-642, KF-643, KF-6020, X-22-4515, KF-6004, KF-6011, KF-6012, KF-6015, and KF-6017 (product names, manufactured by Shin-Etsu Chemical Co., Ltd.).

As the fluorine-based surfactant, a fluorine-modified polymer is preferably used, and specific examples thereof include BYK-340 (product name, manufactured by BYK Japan KK).

The surfactant may be used alone or in combination of two or more kinds thereof.

In a case where the reaction liquid contains the surfactant, the content of the surfactant is preferably 5.0% by mass or less, more preferably 3.0% by mass or less, even more preferably 2.0% by mass or less, particularly preferably 1.5% by mass or less, and more particularly preferably 1.0% by mass or less, with respect to the total amount of the reaction liquid. When the content of the surfactant is within the above ranges, and particularly 2.0% by mass or less, the viscosity of a mixed liquid in which the reaction liquid and a transparent ink are mixed is likely to increase, a resin layer is more favorably formed in the vicinity of the surface of fabric, and an image having more favorable color developability and rubbing fastness tends to be obtained.

The lower limit of the content of the surfactant is not particularly limited and is preferably 0.1% by mass or more, further preferably 0.3% by mass or more, and more preferably 0.5% by mass or more, with respect to the total amount of the reaction liquid. Other components

The reaction liquid may contain additives such as a pH adjuster, an antiseptic/fungicide, a rust inhibitor, a chelating agent, a viscosity modifier, a dissolution aid, and an antioxidant, if necessary. A content of such an additive when contained is preferably 0.05% to 5% by mass, more preferably 0.1% to 3% by mass, and further preferably 0.1% to 1% by mass, with respect to the total amount of the reaction liquid.

The reaction liquid may contain a coloring material such as a pigment, a content of the coloring material is preferably 0.2% by mass or less, more preferably 0.1% by mass or less, and further preferably 0.05% by mass or less, with respect to the total amount of the reaction liquid, and a lower limit of the content is 0% by mass. The reaction liquid preferably contains no coloring material.

### 1. 1. 1. 4. Physical properties

It is preferable that the viscosity (for example, the viscosity after 3 minutes from mixing) of a mixed liquid (equal-amount mixed liquid) obtained by mixing equal amounts of the reaction liquid and the transparent ink composition described below be 50 mPa·s or more at 20°C. When the viscosity of the equal-amount mixed liquid is 50 mPa·s or more at 20°C, the speed of penetration into fabric becomes slow, a transparent ink layer (resin layer) can be favorably formed in the vicinity of a surface of the fabric, and a flatter contact surface with metal foil can be formed.

The viscosity of the equal-amount mixed liquid at 20°C is 50 mPa·s or more, more preferably 100 mPa·s or more, still more preferably 300 mPa·s or more, particularly preferably 500 mPa·s or more, and more particularly preferably 750 mPa·s or more. The upper limit of the viscosity of the equal-amount mixed liquid is not particularly limited, but is preferably 10000 mPa·s or less, more preferably 5000 mPa·s or less, particularly preferably 2500 mPa·s or less, and more particularly preferably 1500 mPa·s or less at 20°C.

For example, the viscosity can be measured using a viscoelasticity tester MCR-300 (product name) manufactured by Physica.

The viscosity of the reaction liquid at 20°C is preferably 1.0 to 10 mPa·s, more preferably 3 to 6 mPa·s, and still more preferably 2.0 to 4.0 mPa·s. In particular, when the viscosity is 3.0 mPa·s or more, more favorable color developability tends to be achieved. When the viscosity is 6.0 mPa·s or less, more favorable ejection stability tends to be obtained.

The surface tension of the reaction liquid is preferably 25 to 40 mN/m, more preferably 25 to 35 mN/m, further preferably 27 to 35 mN/m, and particularly preferably 30 to 33 mN/m. For example, the surface tension can be measured based on a Wilhelmy method using a surface tensiometer (DY-300 manufactured by Kyowa Interface Science Co., Ltd.). The surface tension is preferably a measurement value at 20°C.

### 1. 1. 2. Attachment amount

The total application amount of the reaction liquid and the transparent ink composition described below is preferably 20 mg/inch² or more, more preferably 50 mg/inch² or more, even more preferably 100 mg/inch² or more, and particularly preferably 150 mg/inch² or more. When the total application amount is within the above ranges, a resin layer is more favorably formed in the vicinity of the surface of fabric, which tends to further contribute to exhibition of filling effect.

The upper limit of the total application amount is not particularly limited, but is preferably 350 mg/inch² or less, more preferably 300 mg/inch² or less, and still more preferably 200 mg/inch² or less.

The application amount ratio of the reaction liquid and the transparent ink composition described below is preferably 1:10 to 10:1, more preferably 3:10 to 10:3, even more preferably 5:10 to 10:5, particularly preferably 7:10 to 10:7, and more particularly preferably 9:10 to 10:9.

### 1. 2. Transparent ink attaching step

In the transparent ink attaching step, a transparent ink composition containing anionic resin particles aggregated by an aggregating agent and water is attached to fabric by an ink jet method. The transparent ink composition will be described below.

### 1. 2. 1. Transparent ink composition

The transparent ink composition used in the transparent ink attaching step contains anionic resin particles and water. Each component contained in the transparent ink composition will be described below.

### 1. 2. 1. 1. Anionic resin particles

The transparent ink composition contains anionic resin particles. In the same manner as the function of the resin particles, the anionic resin particles have a function to adhere the metal foil, which is applied in the metal foil attaching step described below, to fabric. In addition, the anionic resin particles also have a function to react with the above-described aggregating agent to be aggregated, and thicken the transparent ink composition. The anionic resin particles are often handled in an emulsion form, but may also be in a powdery form.

The "anionic resin particles" mean resin particles having a negative charge as the entire resin particles and preferably have one or more anionic groups selected from a carboxy group, a sulfonic acid group, a phosphoric acid group, and the like.

Examples of the resin particles include resin particles formed from a urethane resin, an acrylic resin (including a styrene-acrylic resin), a fluorene resin, an olefin resin, a rosin-modified resin, a terpene resin, an ester resin, an amide resin, an epoxy resin, a vinyl chloride resin, a vinyl chloride-vinyl acetate copolymer, and an ethylene vinyl acetate resin. Among these, a urethane resin, an acrylic resin, an olefin resin, and an ester resin are preferably used. One kind of the resin particles may be used alone, or two or more kinds thereof may be used in combination.

The urethane resin is a general term for resins having a urethane bond. A urethane resin including another bond in addition to a urethane bond, such as polyether-type urethane resin including an ether bond in a main chain, an ester-type urethane resin including an ester bond in a main chain, a carbonate-type urethane resin including a carbonate bond in a main chain, or the like may also be used as the urethane resin. A commercially available product may be used as the urethane resin, and examples thereof include Superflex 460, 460s, 840, and E-4000 (product names, manufactured by DKS Co., Ltd.), Resamine D-1060, D-2020, D-4080, D-4200, D-6300, and D-6455 (product names, manufactured by Dainichiseika Color & Chemicals Mfg. Co., Ltd.), TAKELAC WS-5100, WS-6021, and W-512-A-6 (product names, manufactured by Mitsui Chemicals Polyurethanes, Inc.), Sancure 2710 (product name, manufactured by The Lubrizol Corporation), and PERMARIN UA-150 (product name, manufactured by Sanyo Chemical Industries, Ltd.).

The acrylic resin is a general term for polymers obtained by polymerizing at least an acrylic monomer such as (meth)acrylic acid and a (meth)acrylate as one component, and examples thereof include a resin obtained from an acrylic monomer, and a copolymer of an acrylic monomer and a monomer other than the acrylic monomer. Examples thereof also include an acrylic-vinyl resin that is a copolymer of an acrylic monomer and a vinyl monomer. In addition, examples of the vinyl monomer include styrene.

As the acrylic monomer, acrylamide, acrylonitrile, and the like can also be used. A commercially available product of a resin emulsion using the acrylic resin as a raw material may be used, and for example, a product selected from FK-854 (product name, manufactured by CHUORIKA KOUGYO Co., Ltd.), Mowinyl 952B and 718A (product names, manufactured by The Nippon Synthetic Chemical Industry Co., Ltd.), and Nipol LX852 and LX874 (product names, manufactured by Zeon Corporation) may be used.

The styrene-acrylic resin is a copolymer obtained from a styrene monomer and a (meth)acrylic monomer, and examples thereof include a styrene-acrylic acid copolymer, a styrene-methacrylic acid copolymer, a styrene-methacrylic acid-acrylate copolymer, a styrene-α-methylstyrene-acrylic acid copolymer, and a styrene-α-methylstyrene-acrylic acid-acrylate copolymer. A commercially available product of the styrene-acrylic resin may be used. For example, JONCRYL 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (product names, manufactured by BASF SE), Mowinyl 966A and 975N (product names, manufactured by The Nippon Synthetic Chemical Industry Co., Ltd.), and VINYBLAN 2586 (manufactured by Nissin Chemical Industry Co., Ltd.) may be used.

The olefin resin is a polymer having an olefin structure such as ethylene, propylene, or butylene in a structural skeleton. Well-known olefin resins can be appropriately selected for use. As the olefin resin, a commercially available product can be used. For example, ARROWBASE CB-1200 and CD-1200 (product names, manufactured by Unitika Ltd.), or the like may be used.

Examples of commercially available products of a polyester resin emulsion include ELITEL KA-5071S, KT-8803, KT-9204, KT-8701, KT-8904, and KT-0507 (product names, manufactured by Unitika Ltd., polyester resin emulsion); hitec E-6500 (product name, manufactured by TOHO Chemical Industry Co., Ltd., polyethylene wax emulsion); and SN-2002 (trade name, manufactured by TOHO Chemical Industry Co., Ltd., polyester resin emulsion).

The anionic resin particles are more preferably selected from a urethane resin, an acrylic resin, and a polyester resin, and still more preferably a urethane resin. In this case, rubbing fastness tends to be further enhanced. Further, in this case, reactivity with the aggregating agent in the reaction liquid is more favorable, and adhesiveness with fabric is also more favorable. The type of the resin may be selected depending on compatibility with fabric. Further, in the case of a so-called hot-melt resin, the metal foil is more favorably attached through heating to a film-forming temperature or higher in the metal foil attaching step.

A glass transition temperature (Tg) of the resin particles is preferably -60°C or higher and 50°C or lower, more preferably -60°C or higher and 40°C or lower, and further preferably - 30°C or higher and 10°C or lower. When the glass transition temperature (Tg) of the resin particles is within the above ranges, fabric (texture) conformability tends to be further enhanced. For example, the glass transition temperature is measured in accordance with JIS K7121 (Testing Methods for Transition Temperatures of Plastics) using a differential scanning calorimeter "DSC 7000" manufactured by Hitachi High-Tech Science Corporation.

The content (solid content concentration) of the anionic resin particles is preferably 1% to 30% by mass, more preferably 2% to 25% by mass, even more preferably 4% to 20% by mass, particularly preferably 6% to 15% by mass, and more particularly preferably 8% to 12% by mass, with respect to the total amount of the transparent ink composition. When the content of the anionic resin particles is within the above ranges, more excellent color developability and suppression of permeation into the back side of fabric tend to be obtained.

### 1. 2. 1. 2. Water

The transparent ink composition contains water. As water, the same type of water as in the above-described reaction liquid can be used.

A content of water is preferably 20% by mass or more, further preferably 30% by mass or more, more preferably 40% by mass or more, and particularly preferably 50% by mass or more, with respect to the total amount of the transparent ink composition. The upper limit of the content of water is not particularly limited and is, for example, preferably 90% by mass or less, further preferably 70% by mass or less, and more preferably 60% by mass or less with respect to the total amount of the transparent ink composition.

### 1. 2. 1. 3. Other components

### Organic solvent

The transparent ink composition may contain an organic solvent. The type, content, and the like of the organic solvent can be the same as those of the above-described reaction liquid.

In the transparent ink composition, the organic solvent preferably includes any of alkanediols, alkylene glycol ethers, and trialkylene glycols, more preferably includes any of 1,2-alkanediols, alkylene glycol ethers, and trialkylene glycols, and even more preferably includes any of propylene glycol, triethylene glycol monobutyl ether, and triethylene glycol. When the organic solvent includes these solvents, color developability and rubbing fastness are more excellent in some cases.

A content of the organic solvent is preferably 10% to 55% by mass, more preferably 15% to 45% by mass, further preferably 20% to 40% by mass, and particularly preferably 25% to 35% by mass, with respect to the total amount of the transparent ink composition. When the content of the organic solvent is within the above ranges, color developability and the rubbing fastness are more excellent in some cases.

### Surfactant

The transparent ink composition may contain a surfactant. The type and the like of the surfactant can be the same as those of the above-described reaction liquid. The transparent ink composition preferably contains a silicone-based surfactant as the surfactant.

The lower limit of a content of the surfactant is preferably 0.05% by mass or more, further preferably 0.1% by mass or more, more preferably 0.2% by mass or more, and particularly preferably 0.3% by mass or more, with respect to the total amount of the transparent ink composition.

The upper limit of the content of the surfactant is preferably 3% by mass or less, more preferably 2% by mass or less, further preferably 1% by mass or less, and particularly preferably 0.8% by mass or less, with respect to the total amount of the transparent ink composition. When the content of the surfactant is within the above ranges, permeability of fabric to the transparent ink composition tends to be easily adjusted to preferable permeability.

### Other components

The transparent ink composition may contain additives such as a pH adjuster, an antiseptic/fungicide, a rust inhibitor, a chelating agent, a viscosity modifier, a dissolution aid, and an antioxidant, if necessary. A content of such an additive when contained is preferably 0.1% to 5% by mass, more preferably 0.1% to 3% by mass, and further preferably 0.1% to 1% by mass, with respect to the total amount of the transparent ink composition.

The transparent ink composition may contain a coloring material such as a pigment. The content of the coloring material is preferably 0.2% by mass or less, more preferably 0.1% by mass or less, and further preferably 0.05% by mass or less, with respect to the total amount of the transparent ink composition, and the lower limit of the content is 0% by mass. The transparent ink composition preferably contains no coloring material.

### 1. 2. 1. 4. Physical properties

It is preferable that the viscosity (for example, the viscosity after 3 minutes from mixing) of a mixed liquid (equal-amount mixed liquid) obtained by mixing equal amounts of the reaction liquid and the transparent ink composition be 50 mPa·s or more at 20°C. When the viscosity of the equal-amount mixed liquid is 50 mPa·s or more at 20°C, the speed of penetration into fabric becomes slow, a transparent ink layer (resin layer) can be favorably formed in the vicinity of a surface of the fabric, and a flatter contact surface with metal foil can be formed.

The viscosity of the transparent ink composition at 20°C is preferably 1.0 to 10 mPa·s, more preferably 1.5 to 8 mPa·s, even more preferably 3 to 6 mPa·s, and still more preferably 2 to 4 mPa·s. In particular, when the viscosity is 3.0 mPa·s or more, more favorable color developability tends to be achieved. When the viscosity is 8.0 mPa·s or less, more favorable ejection stability tends to be obtained.

Surface tension of the transparent ink composition is preferably 10 to 40 mN/m, more preferably 15 to 35 mN/m, further preferably 20 to 30 mN/m, and particularly preferably 20 to 27 mN/m at 20°C.

When the viscosities of both the reaction liquid and the transparent ink composition are 3.0 mPa·s or more and 6.0 mPa·s or less, a higher definition image is easily formed.

### 1. 2. 2. Attachment amount

The total application amount of the reaction liquid and the transparent ink composition is preferably 20 mg/inch² or more, more preferably 50 mg/inch² or more, even more preferably 100 mg/inch² or more, and particularly preferably 150 mg/inch² or more. When the total application amount is within the above ranges, a resin layer is more favorably formed in the vicinity of the surface of fabric, which tends to further contribute to exhibition of filling effect.

The upper limit of the total application amount is not particularly limited, but is preferably 350 mg/inch² or less, more preferably 300 mg/inch² or less, and still more preferably 200 mg/inch² or less.

The lower limit of the application amount of the transparent ink composition is preferably set such that the amount of the anionic resin particles per unit area is 1 mg/inch² or more, more preferably 8 mg/inch² or more, even more preferably 10 mg/inch² or more, and particularly preferably 15 mg/inch² or more. When the application amount of the transparent ink composition is within the above ranges, transfer efficiency of metal foil is improved, and an image having improved color developability is obtained.

On the other hand, the upper limit of the application amount of the transparent ink composition is preferably set such that the amount of the anionic resin particles per unit area is 40 mg/inch² or less, more preferably 30 mg/inch² or less, and even more preferably 20 mg/inch² or less. In this way, printed matter having more favorable texture is obtained.

### 1. 3. Metal foil attaching step

In the metal foil attaching step, metal foil is attached to the region to which the transparent ink composition is attached. The metal foil can impart metallic luster to an image obtained by an ink jet recording method. As the metal foil, a thin sheet of metal foil may be used, or a metal layer formed on a sheet by vapor deposition or the like may be used.

The thickness of the metal foil is not limited as long as metallic luster is exhibited, and is, for example, 100 nm or more, preferably 500 nm or more, more preferably 1 µm or more, and still more preferably 5 µm or more. When the thickness of the metal foil is within these ranges, the metal foil is more easily handled, and luster is easily imparted to an image to be formed. On the other hand, the upper limit of the thickness of the metal foil is preferably 100 µm or less, and more preferably 50 µm or less. The thickness is further preferably 10 µm or less. When the thickness of the metal foil is within these ranges, texture of recorded matter can be made more favorable, and costs can also be suppressed.

As the metal foil, a metal film formed on a surface of an appropriate sheet may be used. Examples of the metal include aluminum, silver, gold, platinum, nickel, chromium, tin, zinc, indium, titanium, iron, copper, and an alloy containing at least one of these metals, and aluminum or an aluminum alloy is preferable.

Examples of the sheet on which the metal foil is formed include a sheet on which a metal layer (metal foil) is formed on a surface of a plastic film (sheet) such as a film or the like formed from a material such as polyethylene terephthalate (PET), polybutylene terephthalate (PBT), polycarbonate, polyethylene naphthalate, polyester, polyethylene, polypropylene, acrylic resin, polystyrene, polyvinyl chloride, polyvinyl acetate, polyvinyl alcohol, polyether ether ketone, polyamide, polyethersulfone, polydiacetate, triacetate, or polyimide.

Such a sheet on which the metal foil is formed can be obtained by forming a metal film on the surface of the sheet by vapor deposition, sputtering, or the like. In addition, a commercially available product may be used as the sheet on which the metal foil is formed. Further, the sheet on which the metal foil is formed may be subjected to a surface (interface) treatment or may have a layer for facilitating peeling so that the metal foil is easily peeled off from the sheet.

In the metal foil attaching step, the metal foil is attached to the region to which the transparent ink composition is attached, but the metal foil may be attached to a region to which the transparent ink composition is not attached. Even in this case, by peeling off the metal foil from the region to which the transparent ink composition is not attached, the metal foil remains in the region to which the transparent ink composition is attached, and a metallic luster image corresponding to the region to which the transparent ink composition is attached can thus be formed.

The metal foil attaching step may be performed by applying pressure and/or heat in a state in which the metal foil is in contact with fabric. Pressure can be applied using, for example, a pressing machine or a pressure roller, and heat can be applied using, for example, warm air, infrared rays, or a contact heater. Pressure and heat can be applied by using a heat press, a heating pressure roller, or the like. It is more preferable to apply pressure and heat. In this manner, the resin of the transparent ink and the metal foil can be more firmly adhered to each other, and thus an image having more favorable fastness is obtained. In particular, when the resin in the transparent ink is formed into a film by heat, adhesiveness to the metal foil is more favorable, which is preferable. The applied pressure is not particularly limited, but is preferably 1.0 N/m² or more, more preferably 2.0 N/m² or more, still more preferably 3.5 N/m² or more, and even more preferably 4.1 N/m² or more, from the viewpoint of easily obtaining the effects as described above. The upper limit of the applied pressure is preferably 10.0 N/m² or less, more preferably 7.0 N/m² or less, still more preferably 6.0 N/m² or less, and even more preferably 5.0 N/m² or less. The heating temperature is not particularly limited, but is preferably 100°C or higher, more preferably 150°C or higher, and still more preferably 165°C or higher, from the viewpoint of easily obtaining the effects as described above. In addition, the upper limit of the heating temperature is preferably 185°C or lower, more preferably 177°C or lower, and still more preferably 173°C or lower, from the viewpoint of reducing damage to fabric which is a recording medium.

### 1. 4. Fabric

Examples of the form of fabric used in the ink jet recording method according to the present embodiment include a cloth, a garment, and other clothing products. The cloth includes woven fabric, knitted fabric, nonwoven fabric, and the like. The garment and other clothing products include those after sewing such as a T-shirt, a handkerchief, a scarf, a towel, and a carrier-bag, a fabric bag, a curtain, a sheet, a bedspread, and a furniture item such as wallpaper as well as a cloth before and after cutting as a component before sewing. Examples of the form thereof include a long roll-shaped form, a form cut in a predetermined size, and a form having a shape of a product.

Examples of material constituting the fabric include natural fibers such as cotton, hemp, wool, and silk; synthetic fibers such as polypropylene, polyester, acetate, triacetate, polyamide, and polyurethane; and biodegradable fibers such as polylactic acid, and mixed fibers thereof may also be used. Among these materials, the fabric is preferably cotton, polyester, polyurethane, or blended fabric of cotton and polyester because such fabric is easily available.

The fabric preferably contains one or more kinds selected from cotton, polyester, and polyurethane. In this case, it is considered that penetration of the ink into the fabric is fast, unevenness is more likely to be caused after attachment of the transparent ink composition, and the metal foil is less likely to be transferred. However, since a resin layer having a flatter surface can be formed by the transparent ink composition of the present embodiment, recorded matter having favorable metallic luster can be obtained.

### 1. 5. Ink jet method

In the ink jet recording method according to the present embodiment, it is preferable that the reaction liquid attaching step and the transparent ink attaching step be performed on the same region of the fabric in the same scanning. Accordingly, the reaction liquid and the transparent ink composition can be simultaneously attached by an ink jet method, and a flat resin layer can be formed in the vicinity of the surface of the fabric to form an adhesion surface with the metal foil. In the present specification, attachment to the same region in the same scanning may be expressed as "attachment in the same pass."

Here, "scanning" means moving the ink jet head relative to a recording region on the fabric. In this case, scanning may be performed by moving the ink jet head with respect to the fabric or by moving the fabric with respect to the ink jet head. Alternatively, a relative positional relationship between the ink jet head and the fabric may be changed by moving positions of the ink jet head and the fabric. The ink jet head can be mounted on, for example, a carriage. The ink jet head may move by moving the carriage, and in this case as well, the movement is regarded as the movement of the ink jet head.

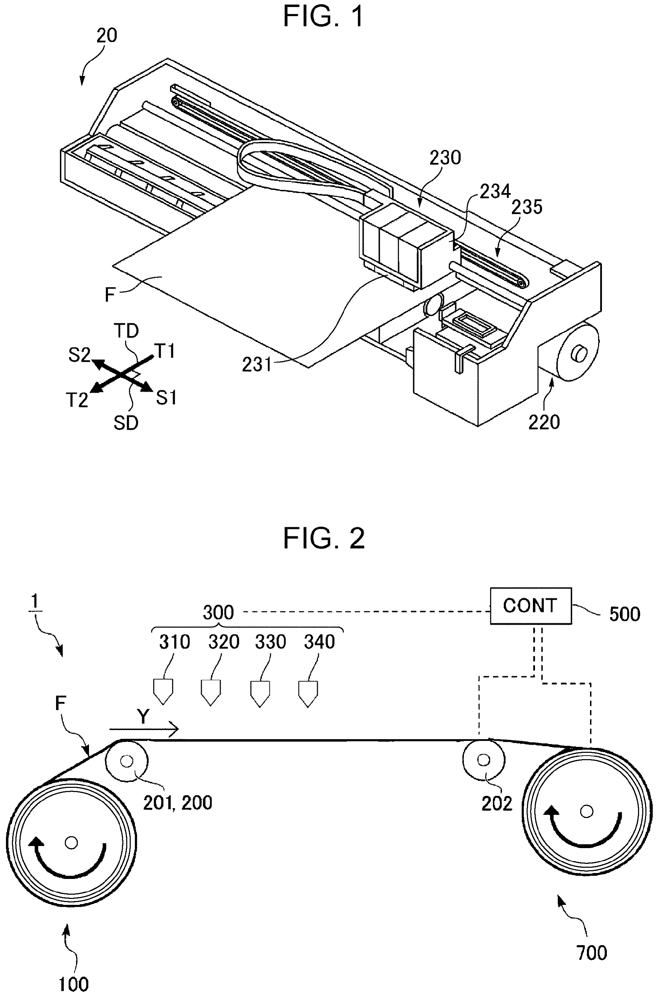

Accordingly, for example, in an ink jet recording apparatus 20 of a serial-type as illustrated in FIG. 1, recording is performed while moving a carriage 234 having an ink jet head 231 in a scanning direction SD intersecting with a transport direction TD of a recording medium F in the "scanning."

On the other hand, for example, in an ink jet recording apparatus 1 of a line-type as illustrated in FIG. 2, recording is performed while the position of a recording medium F is relatively moved, with respect to a line head 300 having a length corresponding to the width of the recording medium F, in a direction intersecting the width direction in the "scanning." In the recording in the line type, the ink jet head (line head) does not move and is fixed during the recording, and the recording is performed in a single scanning.

The "length corresponding to the width of the recording medium" is not limited to a case in which the width of the recording medium and the length (width) of the line head completely match, and may include a case of a length greater than or equal to the length corresponding to the width of the recording medium and a case of a length corresponding to a width (recording width) of the recording medium onto which the ink is to be ejected (an image is to be recorded).

The number of times of the same scanning with respect to the same region in the fabric, in which the reaction liquid attaching step and the transparent ink attaching step described below are performed, may be one or a plurality of times. In a case where the number of times of the same scanning performed on the same region of the fabric is set to a plurality of times, the ink jet heads which eject the reaction liquid and the transparent ink passes over the same region of the fabric the plurality of times. As the number of times of scanning increases, the reaction liquid and the transparent ink can be attached to a desired region in a plurality of times (a plurality of passes), and the image quality of recorded matter obtained is further improved in some cases.

More specifically, for example, in FIG. 1, when the length of one transport of the recording medium F in the transport direction TD is a quarter of the length in the transport direction TD of a row of nozzles of the ink jet head arranged in the direction intersecting the scanning direction SD, the same portion (the same region) is scanned four times in a rectangular scanning region having the length of one transport in the transport direction TD and extending in the scanning direction SD.

When the same scanning is performed a plurality of times, the number of times of scanning is preferably 2 or more, more preferably 3 or more, still more preferably 4 or more, and particularly preferably 6 or more, from the viewpoint of more excellent image quality. The upper limit is not limited, but, from the viewpoint of productivity, is preferably 24 or less, more preferably 12 or less, and further more preferably 8 or less.

On the other hand, it is preferable that the number of times of the scanning performed on the same scanning region in the recording medium be set to once in the reaction liquid attaching step and once in the transparent ink attaching step. In a case where the number of times of the scanning performed on the same scanning region in the recording medium is set to once in the reaction liquid attaching step and once in the transparent ink attaching step, the scanning may be performed by the same scanning pass or may be performed by different scanning passes.

### 1. 6. Timing of attaching steps

The difference in landing time on the same region of the fabric between the reaction liquid attaching step and the transparent ink attaching step falls within 60 seconds.

The time difference between attachment of the reaction liquid and attachment of the transparent ink composition in the same region of the fabric is within 60 seconds (sec). The time difference between attachment of the reaction liquid and attachment of the transparent ink composition in the same region of the fabric is preferably within 30 seconds, more preferably within 15 seconds, further preferably within 5 seconds, still further preferably within 1 second, particularly preferably within 0.5 seconds, and more particularly preferably within 0.1 seconds. When the time difference is within the above ranges, a flatter resin layer can be formed in the vicinity of the surface of the fabric, and image quality (color development and luster) of the image tends to be more excellent.

Since fabric generally has high permeability to liquid such as ink, it is difficult to form a resin layer in the vicinity of the surface of the fabric. However, by setting the time difference between attachment of the reaction liquid and attachment of the transparent ink to be within the above ranges, the resin in the transparent ink composition can be aggregated while both the transparent ink composition and the reaction liquid are in the vicinity of the surface of the fabric. As a result, the resin layer having a certain film thickness or more is flatly formed in the vicinity of the surface of the fabric, and the metal foil can be more suitably adhered. When the resin is aggregated before penetrating into the inside of the fabric, it is easy to suppress the fabric from becoming hard, and it is also possible to obtain more favorable texture.

### 1. 7. Other steps

The ink jet recording method of the present embodiment may include, for example, the following steps.

### 1. 7. 1. Drying step

The ink jet recording method according to the present embodiment may include drying (drying step) the ink and the like attached to the fabric after the reaction liquid attaching step and the transparent ink composition attaching step described above. The drying step may be performed at room temperature or may be accompanied by heating.

The drying method is not particularly limited, and examples thereof include air blowing, a belt conveyor oven, an atmospheric pressure steam method, a high-pressure steam method, a thermofixation method, and a combination thereof. A heat source at the time of heating and drying is not particularly limited, and for example, an infrared lamp or the like can be used.

The heating temperature is preferably a temperature at which the resin particles contained in the transparent ink composition are fused and the medium such as moisture is volatilized. The heating and drying temperature is, for example, preferably 100°C or higher and 250°C or lower, more preferably 120°C or higher and 230°C or lower, still more preferably 140°C or higher and 200°C or lower, and particularly preferably 150°C or higher and 180°C or lower. Here, the heating and drying temperature in the heating and drying step refers to the surface temperature of the image or the like formed on the fabric. The time for heating and drying is not particularly limited, but is, for example, preferably 30 seconds or more and 20 minutes or less, more preferably 2 minutes or more and 5 minutes or less.

In a case where the ink jet recording method includes the drying step, moisture in the resin film formed by the transparent ink composition can be further dried, the concentration of the resin in the film is increased, and the adhesive force of the metal foil is increased. As a result, an image having more favorable color developability and fastness is obtained.

### 1. 7. 2. Colored ink attaching step

The ink jet recording method according to the present embodiment may include a colored ink attaching step of attaching, by an ink jet method, a colored ink composition containing anionic resin particles, a coloring material, and water onto the region of the fabric to which the transparent ink composition is attached. The colored ink composition attached in the colored ink attaching step forms a base of the metal foil, and can improve color developability (hue of luster) of the metal foil. For example, in a case where the fabric is white, when a black ink is attached as the colored ink composition, color developability of gold color becomes better in a case where the metal foil is gold color.

In the transparent ink composition attached in the above-described manner, the anionic resin particles in the transparent ink are aggregated in the vicinity of the surface of the fabric to form a resin layer, and the colored ink composition is attached thereon. The colored ink composition is disposed between the resin layer of the transparent ink composition and the metal foil.

### Colored ink composition

The colored ink composition used in the colored ink attaching step contains anionic resin particles, a coloring material, and water. Each component contained in the colored ink composition will be described below.

### 1. Anionic resin particles

The colored ink composition contains anionic resin particles. The anionic resin particles may have the same configuration as the anionic resin particles contained in the transparent ink composition described above, and thus the description thereof will be omitted. The anionic resin particles contained in the colored ink composition may be the same as or different from the anionic resin particles contained in the transparent ink composition.

When the colored ink composition contains the anionic resin particles, a resin layer is formed by the anionic resin particles of the colored ink composition on the resin layer formed by aggregation of the anionic resin particles in the transparent ink in the vicinity of the surface of the fabric. Consequently, color developability can be improved. In addition, adhesiveness of the metal foil may be improved by the resin layer formed from the anionic resin particles of the colored ink composition. In addition, the resin layer formed from the anionic resin particles of the colored ink composition is unlikely to reduce adhesiveness of the metal foil.

Since the resin particles in the colored ink composition are anionic, the resin particles are more excellent in the aggregation action of the aggregating agent, and therefore, more favorable color developability tends to be obtained, and more favorable rubbing fastness tends to be obtained.

The anionic resin particles in the colored ink composition are preferably a urethane resin or an acrylic resin, and more preferably a urethane resin. In this case, an image having more excellent rubbing fastness tends to be formed.

The glass transition temperature (Tg) of the resin particles in the colored ink composition is preferably -60°C or higher and 50°C or lower, more preferably -60°C or higher and 40°C or lower, and still more preferably -30°C or higher and 10°C or lower. When the glass transition temperature (Tg) of the resin particles is within the above ranges, fabric (texture) conformability tends to be further enhanced.

The content (solid content concentration) of the resin particles is preferably 1% to 30% by mass, more preferably 2% to 25% by mass, even more preferably 4% to 20% by mass, particularly preferably 6% to 15% by mass, and more particularly preferably 8% to 12% by mass, with respect to the total amount of the colored ink composition. When the content of the resin particles is within the above ranges, more excellent color developability and suppression of permeation into the back side of fabric tend to be obtained.

### 2. Coloring material

The colored ink composition contains a coloring material. Examples of the coloring material include a pigment and a dye. As the pigment, for example, an inorganic pigment or an organic pigment can be used.

The inorganic pigment is not particularly limited, and examples thereof include carbon black such as C.I. Pigment Black 6 (lamp black, vegetable black), C.I. Pigment Black 7 (furnace black, channel black, thermal black, acetylene black), C.I. Pigment Black 8 (charcoal black), and C.I. Pigment Black 10 (graphite); and white pigments such as iron oxide, titanium oxide, zinc oxide, and silica.

Examples of the carbon black include No. 2300, 900, MCF88, No. 20B, No. 33, No. 40, No. 45, No. 52, MA7, MA8, MA100, and No2200B manufactured by Mitsubishi Chemical Corporation. Examples thereof also include color black FW1, FW2, FW2V, FW18, FW200, S150, S160, and S170, Pretex 35, U, V, and 140U, and special black 6, 5, 4A, 4, and 250 manufactured by Degussa AG. Examples thereof also include Conductex SC and Raven 1255, 5750, 5250, 5000, 3500, 1255, and 700 manufactured by Columbia Carbon Corporation. Examples thereof also include Regal 400R, 330R, and 660R, Mogul L, Monarch 700, 800, 880, 900, 1000, 1100, 1300, and 1400, and Elftex 12 manufactured by Cabot Corporation.

Examples of the white pigment include C.I. Pigment White 1, which is basic lead carbonate, C.I. Pigment White 4 made of zinc oxide, C.I. Pigment White 5 made of a mixture of zinc sulfide and barium sulfate, C.I. Pigment White 6 made of titanium dioxide, C.I. Pigment White 6:1 made of titanium dioxide containing another metal oxide, C.I. Pigment White 7 made of zinc sulfide, C.I. Pigment White 18 made of calcium carbonate, C.I. Pigment White 19 made of clay, C.I. Pigment White 20 made of mica titanium, C.I. Pigment White 21 made of barium sulfate, C.I. Pigment White 22 made of gypsum, C.I. Pigment White 26 made of magnesium oxide and silicon dioxide, C.I. Pigment White 27 made of silicon dioxide, and C.I. Pigment White 28 made of anhydrous calcium silicate. Among these, C.I. Pigment White 6 which is excellent in color developability, masking properties, and the like is preferably used.

An average particle diameter of the white pigment is preferably 100 nm or more and 500 nm or less, more preferably 50 nm or more and 450 nm or less, and further preferably 200 nm or more and 400 nm or less. When the average particle diameter of the white pigment is within these ranges, stability of ejection from the ink jet head tends to be secured. In addition, masking properties tend to be improved. In the present specification, unless otherwise specified, the "average particle diameter" refers to a volume-based particle size distribution that is a particle diameter at a cumulative distribution of 50 vol%. The average particle diameter is measured by a dynamic light scattering method or a laser diffraction light method described in JIS Z 8825. Specifically, a particle size analyzer (for example, "Microtrac UPA" manufactured by Nikkiso Co., Ltd.) using the dynamic light scattering method as a measurement principle can be used.

Examples of the organic pigment include a quinacridone-based pigment, a quinacridone quinone-based pigment, a dioxazine-based pigment, a phthalocyanine-based pigment, an anthrapyrimidine-based pigment, an anthanthrone-based pigment, an indanthrone-based pigment, a flavanthrone-based pigment, a perylene-based pigment, a diketopyrrolopyrrole-based pigment, a perinone-based pigment, a quinophthalone-based pigment, an anthraquinone-based pigment, a thioindigo-based pigment, a benzimidazolone-based pigment, an isoindolinone-based pigment, an azomethine-based pigment, an azo-based pigment, and the like.

Specific examples of the organic pigment include the following ones.

Examples of cyan pigments include C.I. Pigment Blue 1, 2, 3, 15:3, 15:4, 15:34, 16, 22, 60, and the like; C.I. Vat Blue 4, 60; and the like, and are preferably a mixture of one or two or more selected from the group consisting of C.I. Pigment Blue 15:3, 15:4, and 60.

Examples of magenta pigments include C.I. Pigment Red 5, 7, 12, 48(Ca), 48(Mn), 57(Ca), 57:1, 112, 122, 123, 168, 184, and 202, C.I. Pigment Violet 19, and the like, and are preferably a mixture of one or two or more selected from the group consisting of C.I. Pigment Red 122, 202, and 209, and C.I. Pigment Violet 19.

Examples of yellow pigments include C.I. Pigment Yellow 1, 2, 3, 12, 13, 14C, 16, 17, 73, 74, 75, 83, 93, 95, 97, 98, 119, 110, 114, 128, 129, 138, 150, 151, 154, 155, 180, 185, and the like, and are preferably a mixture of one or two or more selected from the group consisting of C.I. Pigment Yellow 74, 109, 110, 128, 138, 150, and 180.

Pigments of other colors can also be used. Examples thereof include an orange pigment and a green pigment.

The pigment may be used alone or in combination of two or more thereof.

The pigment may be used after dispersing the pigment using a pigment dispersant. The pigment may be used after dispersing the pigment as a self-dispersible pigment by oxidizing or sulfonating a surface of the pigment using ozone, hypochlorous acid, fuming sulfuric acid, or the like.

The pigment dispersant has a function of dispersing the pigment in the ink. The pigment dispersant may be water-soluble but is preferably not completely water-soluble. The pigment dispersant is considered to disperse the pigment by bonding to or adsorbing on the pigment in part or as a whole to increase hydrophilicity of a surface of the pigment.

The pigment dispersant is a polymer compound, and examples of the polymer compound include an acrylic resin such as poly(meth)acrylic acid, a (meth)acrylic acid-acrylonitrile copolymer, a (meth)acrylic acid-(meth)acrylate copolymer, a vinyl acetate-(meth)acrylate copolymer, a vinyl acetate-(meth)acrylic acid copolymer, a vinylnaphthalene-(meth)acrylic acid copolymer, a styrene-(meth)acrylic acid copolymer, a styrene-(meth)acrylic acid-(meth)acrylate copolymer, a styrene-α-methylstyrene-(meth)acrylic acid copolymer, and a styrene-α-methylstyrene-(meth)acrylic acid-(meth)acrylate copolymer; and salts thereof.

Examples of the pigment dispersant also include maleic acid-based resins such as a styrene-maleic acid copolymer, a styrene-maleic anhydride copolymer, a vinylnaphthalene-maleic acid copolymer, and a vinyl acetate-maleate copolymer, and salts thereof; urethane-based resins with or without a cross-linked structure and salts thereof; polyvinyl alcohols; and vinyl acetate-crotonic acid copolymers and salts thereof.

The acrylic resin may include not only a polymer of an acrylic monomer as described above, but also a copolymer of an acrylic monomer and another monomer. For example, an acrylic vinyl resin of a copolymer with a vinyl-based monomer as another monomer is also referred to as the acrylic resin. In addition, the acrylic resin also includes, for example, a copolymer of a styrene-based monomer and an acrylic monomer among the above-described styrene-based resins. Furthermore, the acrylic resin also includes a salt and an esterified product thereof.

Examples of a commercially available product of the pigment dispersant include X-200, X-1, X-205, X-220, and X-228 (manufactured by Seiko PMC Corporation), NOPCOSPERSE (registered trademark) 6100 and 6110 (manufactured by SAN NOPCO LIMITED), Joncryl 67, 586, 611, 678, 680, 682, and 819 (manufactured by BASF SE), DISPERBYK-190 (manufactured by BYK Japan KK), and N-EA137, N-EA157, N-EA167, N-EA177, N-EA197D, N-EA207D, and E-EN10 (manufactured by DKS Co., Ltd.).

Examples of a commercially available product of the acrylic pigment dispersant include BYK-187, BYK-190, BYK-191, BYK-194N, and BYK-199 (manufactured by BYK Japan KK) and Aron A-210, A6114, AS-1100, AS-1800, A-30SL, A-7250, and CL-2 (manufactured by TOAGOSEI CO., LTD.).

Examples of a commercially available product of a urethane-based pigment dispersant include BYK-182, BYK-183, BYK-184, and BYK-185 (manufactured by BYK Japan KK), TEGO Disperse 710 (manufactured by Evonik Tego Chemie GmbH), and Borchi (registered trademark) Gen1350 (manufactured by OMG Borschers GmbH).

The pigment dispersant is preferably an anionic pigment dispersant. The "anionic pigment dispersant" refers to a pigment dispersant having a negative charge as a whole pigment dispersant and preferably has one or more anionic groups selected from a carboxy group, a sulfonic acid group, a phosphoric acid group, and the like.

It is preferable that at least one of the coloring material and the resin particles described below in the colored ink composition be anionic. In this case, since the aggregation action of the aggregating agent is more excellent, more favorable color developability tends to be obtained, and more favorable suppression of permeation into the back side of fabric tends to be obtained.

The fact that the coloring material is anionic means that the coloring material has a negative charge as a whole, and the coloring material preferably has one or more anionic groups selected from a carboxy group, a sulfonic acid group, a phosphoric acid group, and the like. The anionic group may be directly present on the surface of the coloring material, or may be present via an anionic resin dispersant adsorbed or bound to the coloring material.

The pigment dispersant may be used alone or in combination of two or more kinds thereof. A total content of the pigment dispersant is preferably 0.1% by mass or more and 30% by mass or less, more preferably 0.5% by mass or more and 25% by mass or less, further preferably 1% by mass or more and 20% by mass or less, and particularly preferably 1.5% by mass or more and 15% by mass or less with respect to 100% by mass of the colored ink composition. When the content of the pigment dispersant is 0.1% by mass or more, stability of dispersion of the pigment tends to be secured. When the content of the pigment dispersant is 30% by mass or less, viscosity of the colored ink composition tends to be reduced.

A weight average molecular weight of the pigment dispersant is further preferably 500 or more. Using such a pigment dispersant reduces odors, and further favorable stability of dispersion of the pigment tends to be achieved.

When the pigment (in particular, the white pigment) is dispersed by the pigment dispersant, a ratio of the pigment to the pigment dispersant is preferably 10:1 to 1:10 and more preferably 4:1 to 1:3.

Although not particularly limited, an acid dye, a direct dye, a reactive dye, and a basic dye can be used as the dye. The dye may be used alone or in combination of two or more kinds thereof.

The dye is not particularly limited, and examples thereof include C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C.I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

A content of the coloring material (particularly, the white pigment) is preferably 1% to 30% by mass, more preferably 2% to 25% by mass, even more preferably 4% to 20% by mass, particularly preferably 6% to 15% by mass, and more particularly preferably 8% to 12% by mass, with respect to the total amount of the colored ink composition. When the content of the coloring material is within the above ranges, more favorable color developability (whiteness) tends to be obtained.

### 3. Water

The colored ink composition contains water. As water, the same type of water as in the above-described reaction liquid can be used.

A content of water is preferably 20% by mass or more, further preferably 30% by mass or more, more preferably 40% by mass or more, and particularly preferably 50% by mass or more, with respect to the total amount of the colored ink composition. The upper limit of the content of water is not particularly limited but is, for example, preferably 90% by mass or less and further preferably 70% by mass or less with respect to the total amount of the colored ink composition.

### 4. Other components

### Organic solvent

The colored ink composition may contain an organic solvent. The type, content, and the like of the organic solvent can be the same as those of the above-described reaction liquid.

In the colored ink composition, the organic solvent preferably includes any of alkanediols, alkylene glycol ethers, and trialkylene glycols, more preferably includes any of 1,2-alkanediols, alkylene glycol ethers, and trialkylene glycols, and even more preferably includes any of propylene glycol, triethylene glycol monobutyl ether, and triethylene glycol. When the organic solvent includes these solvents, color developability and suppression of permeation into the back side of fabric may be more excellent.

The colored ink composition further preferably contains 3.0% by mass or more, more preferably 5.0% by mass or more, and further preferably 7.0% by mass or more of an organic solvent having a standard boiling point of 250°C or higher. The upper limit of a content of the organic solvent is not particularly limited but is preferably 20% by mass or less, more preferably 15% by mass or less, and further preferably 10% by mass or less.

When the organic solvent having a standard boiling point of 250°C or higher is contained within the above ranges, humidity of a nozzle of the ink jet head is maintained, and further favorable reliability of ejection (stability of continuous printing) tends to be achieved.

Examples of the organic solvent having a standard boiling point of 250°C or higher include glycerin and polyethylene glycol monomethyl ether. The organic solvent having a standard boiling point of 250°C or higher is also referred to as a moisturizer. The organic solvent having a standard boiling point of 250°C or higher more preferably has a standard boiling point of 270°C or higher, and still more preferably has a standard boiling point of 280°C or higher.

A content of the organic solvent is preferably 5% to 50% by mass, more preferably 10% to 40% by mass, further preferably 15% to 30% by mass, and particularly preferably 20% to 25% by mass, with respect to the total amount of the colored ink composition. When the content of the organic solvent is within the above ranges, color developability and suppression of permeation into the back side of fabric may be more excellent.

### Surfactant

The colored ink composition may contain a surfactant. The type and the like of the surfactant can be the same as those of the above-described reaction liquid. The colored ink composition preferably contains a silicone-based surfactant as the surfactant.

The lower limit of a content of the surfactant is preferably 0.05% by mass or more, further preferably 0.1% by mass or more, more preferably 0.2% by mass or more, and particularly preferably 0.3% by mass or more, with respect to the total amount of the colored ink composition.

The upper limit of the content of the surfactant is preferably 3% by mass or less, more preferably 2% by mass or less, further preferably 1% by mass or less, and particularly preferably 0.5% by mass or less, with respect to the total amount of the colored ink composition. When the content of the surfactant is within the above ranges, permeability of the fabric to the colored ink composition tends to be easily adjusted to preferable permeability.

### Other components

The colored ink composition may contain additives such as a pH adjuster, an antiseptic/fungicide, a rust inhibitor, a chelating agent, a viscosity modifier, a dissolution aid, and an antioxidant, if necessary. A content of such an additive when contained is preferably 0.1% to 5% by mass, more preferably 0.1% to 3% by mass, and further preferably 0.1% to 1% by mass, with respect to the total amount of the colored ink composition.

### 5. Physical properties

The viscosity of the colored ink composition at 20°C is preferably 1.0 to 10 mPa·s, more preferably 2.0 to 10 mPa·s, even more preferably 3.0 to 8.0 mPa·s, and particularly preferably 4.0 to 6.0 mPa·s. In particular, when the viscosity is 4.0 mPa·s or more, more favorable color developability tends to be obtained. When the viscosity is 6.0 mPa·s or less, more favorable ejection stability tends to be obtained.

Surface tension of the colored ink composition is preferably 10 to 40 mN/m, more preferably 15 to 35 mN/m, further preferably 20 to 30 mN/m, and particularly preferably 20 to 27 mN/m at 20°C.

### 1. 7. 3. Other steps

The ink jet recording method according to the present embodiment may include rinsing with water the fabric on which recording is performed, performing heating and drying again, and the like. In rinsing with water, components such as the ink not fixed on the fabric may be washed out using a hot soap liquid or the like, as necessary, as soaping treatment.

### 1. 8. Operational effects

According to the ink jet recording method, a flat resin layer on the surface layer of the fabric can be formed by attaching the reaction liquid and the transparent ink composition to the same region of the fabric with a difference in landing time within 60 seconds. Consequently, the metal foil can be favorably attached, and a print having a metallic luster image with favorable color developability and rubbing fastness can be performed. In general, a surface of fabric is not smooth, and metal foil is less likely to adhere to the surface as it is, and since the surface is not smooth, metallic luster (color developability) is less likely to be exhibited. However, according to the ink jet recording method, the above-described effects can be obtained. Such an effect cannot be sufficiently obtained only by adjusting the attachment amount of the transparent ink composition, and it is considered that the effects are achieved by the difference in landing time on the same region of the fabric is within 60 seconds.

### 2. Recording apparatus

An ink jet recording apparatus that can be preferably used for the ink jet recording method according to the present embodiment will be described.

FIG. 1 is a perspective view of a serial printer as an example of the ink jet recording apparatus. As shown in FIG. 1, a serial printer 20 includes a transport section 220 and a recording section 230. The transport section 220 transports a recording medium F fed to the serial printer to the recording section 230 and discharges the recording medium after recording to the outside of the serial printer. Specifically, the transport section 220 includes feed rollers and transports the fed recording medium F in a transport direction TD.

In addition, the recording section 230 includes: a carriage 234 on which an ink jet head 231 is mounted, the ink jet head 231 having a nozzle that ejects the reaction liquid, a nozzle that ejects the transparent ink composition, and a nozzle that ejects the colored ink composition respectively on the recording medium F fed from the transport section 220; and a carriage movement mechanism 235 which moves the carriage 234 in a scanning direction SD of the recording medium F.

In the case of the serial printer, a head having a length smaller than the width of the recording medium is provided as the ink jet head 231, and recording is performed while the head moves in the scanning direction SD which intersects the transport direction TD of the recording medium F. In addition, in the serial printer, the head 231 is mounted on the carriage 234 which moves in a predetermined direction, and the ink composition and the reaction liquid are ejected onto the recording medium by the head moving along with the movement of the carriage. The recording medium may be transported between scanning passes.

In addition, the ink jet recording apparatus is not limited to the serial type printer, and may be a line type printer. FIG. 2 is a schematic side view of a line printer as another example of the ink jet recording apparatus. As illustrated in FIG. 2, a line printer 1 includes a feeder 100, a transport mechanism 200 that transports a recording medium in a transport direction, a line head 300 that ejects and attaches ink to the recording medium, a controller 500, and a discharge section 700.

The transport mechanism is a mechanism for transporting the recording medium in the transport direction. In FIG. 2, a roll-shaped recording medium F is fed from the feeder 100 to the transport mechanism 200, and the transport mechanism 200 is configured to transport the recording medium F fed from the feeder 100 to the line head 300. Specifically, the transport mechanism 200 includes a first feed roller 201 and a second feed roller 202 and is configured to transport the fed recording medium F to the line head 300 on the downstream side in the transport direction. As a transport method of the transport mechanism 200, a known method in the related art can be appropriately used, or one or a plurality of rollers, a belt fed by a roller, or the like may be used.

The line printer 1 includes a line head 300 having a length corresponding to the width of the recording medium F. The line head 300 may be configured with a plurality of line heads. In FIG. 2, the line head 300 is configured with a first line head 310, a second line head 320, a third line head 330, and a fourth line head 340. The first line head 310, the second line head 320, the third line head 330, and the fourth line head 340 will be also simply referred to as the line head 300 when they are not required to be distinguished from one another.

The line head 300 includes cavities respectively accommodating the reaction liquid, the transparent ink composition, and the colored ink composition (ink or the like), ejection driving sections provided for the respective cavities, and nozzles each ejecting the ink or the like. A plurality of cavities and a plurality of ejection driving sections and a plurality of nozzles provided for each cavity may be provided in one head independently of one another. The ejection driving section can be formed using an electromechanical conversion element such as a piezoelectric element that changes the volume of the cavities by mechanical deformation, an electrothermal conversion element that emits heat to generate an air bubble in the ink and ejects the ink, and the like.

For example, the line head 300 is preferably configured to eject the reaction liquid from the first line head 310 and eject the transparent ink composition from the second line head 320. In this way, the reaction liquid attaching step and the transparent ink attaching step can be performed on the same region of the fabric in the same scanning. In addition, it is preferable that the white ink composition as the colored ink composition be ejected from the third line head 330 and a non-white ink composition as the colored ink composition be ejected from the fourth line head 340.

In the line printer, the head is fixed (substantially) without moving, and recording is performed by one scanning pass of the ink jet head. The line printer is more advantageous than the serial printer in that the recording speed is high.

The fabric to which the reaction liquid, the transparent ink composition, and, if necessary, the colored ink composition are attached is obtained by the serial printer 20 or the line printer 1 described above.

The obtained fabric can be dried by an appropriate dryer, if necessary. Then, the obtained fabric is disposed, for example, on a sheet on which a metal layer is formed so that the recording surface and the surface of the metal layer are in contact with each other. In this manner, the metal foil attaching step can be performed. This step is performed using, for example, a heat press, a heating and pressing roller, or the like.

Thereafter, the sheet is peeled off by an appropriate device, and recorded matter in which the metal foil corresponding to the attachment region of the transparent ink composition is formed on the surface of the fabric can thus be obtained.

### 3. Examples and Comparative Examples

The present disclosure will be described in more detail with reference to Examples and the like, but the present disclosure is not limited to these examples. Hereinafter, "part" and "%" are based on mass unless otherwise specified. Unless otherwise specified, the evaluation is carried out in an environment of a temperature of 25°C and a relative humidity of 40.0%.

### 3. 1. Preparation of reaction liquid, transparent ink composition, and colored ink composition

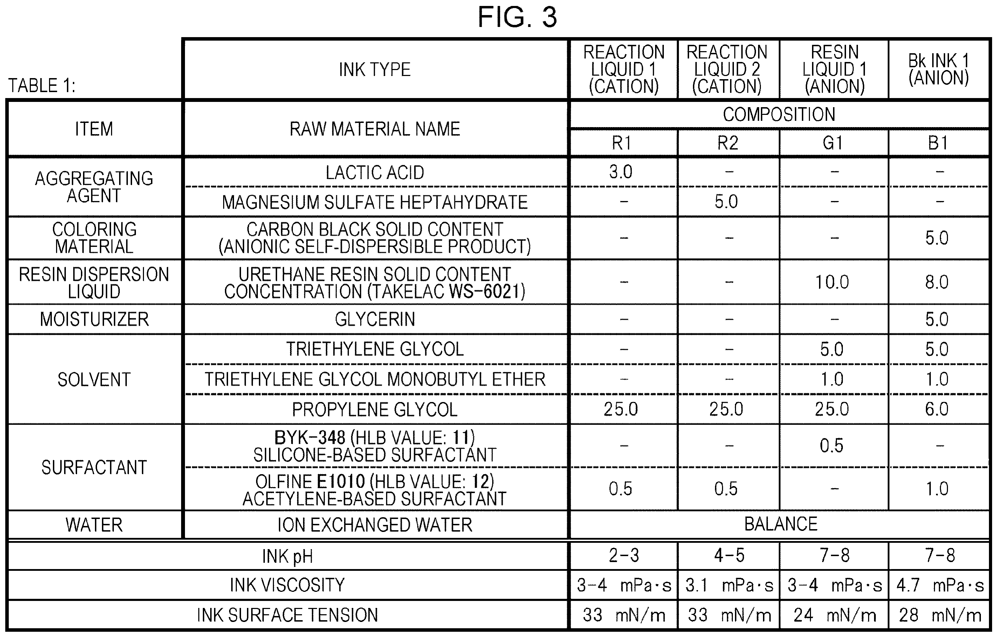

Reaction liquids 1 and 2 (composition R1 and composition R2), a resin liquid 1 (transparent ink composition (composition G1)), and a Bk ink 1 (black ink composition (composition B1)) used in examples were each obtained by putting components into a vessel so as to achieve the composition of Table 1 (FIG. 3), mixing and stirring same, followed by filtering with a membrane filter of 5 µm. Unless otherwise specified, numerical values for the respective components shown in each example in the tables indicate mass%. In the table, the mass% of the coloring material and the resin particles represents the solid content concentration, and water was added so that the total mass of the composition was 100% by mass.

As the black pigment, "CAB-O-JET300" (manufactured by Cabot Corporation, solids content: 15%), which is a self-dispersible carbon black pigment, was used.

Table 1 shows the pH, viscosity, and surface tension of each ink. These physical properties were measured by the Wilhelmy method using a pH meter, a viscoelasticity tester MCR-300 (product name, manufactured by Physica) at 20°C, and a surface tensiometer (DY-300, manufactured by Kyowa Interface Science Co., Ltd), respectively.

Supplementary descriptions will be provided for the items shown in Table 1.
TAKELAC WS-6021 (product name, manufactured by Mitsui Chemicals Polyurethanes, Inc.)
BYK-348 (product name, manufactured by BYK Japan KK, silicon-based surfactant)
OLFINE E1010 (product name, manufactured by Nissin Chemical Industry Co., Ltd., acetylene glycol-based surfactant)

### 3. 2. Recording conditions

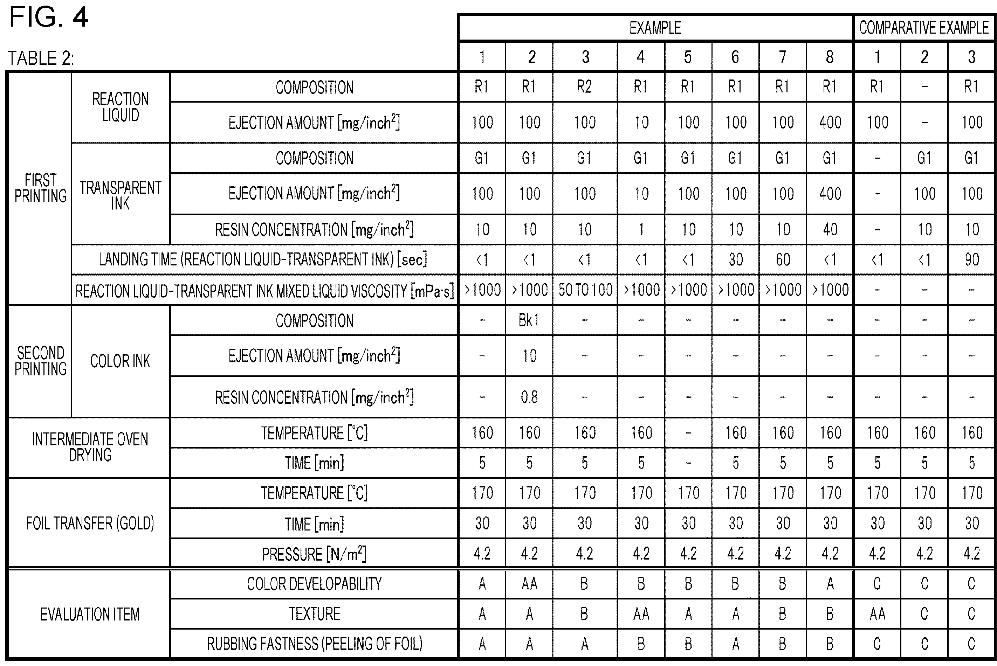

The ink jet recording method was performed according to each of Examples and Comparative Examples on the basis of the conditions shown in Table 2 (FIG. 4) using the reaction liquid (R1 or R2), the transparent ink composition (G1), and the colored ink compositions (Bk ink, B1) obtained above.

To be specific, an ink jet printer (product name: SC-F2250, manufactured by Seiko Epson Corporation) was filled with the reaction liquid and the transparent ink composition obtained above, and printing (first printing) was performed on fabric (100% white cotton, Printstar 00085-CVT manufactured by TOMS Co., Ltd.) under the conditions described in Table 2 with a solid-fill pattern which can be recorded at a duty of 100% and a resolution of 1200 dpi (horizontal) × 1200 dpi (vertical). Thereafter, in Example 2, the colored ink composition was printed, at a resolution of 600 dpi (horizontal) × 600 dpi (vertical), on the region on which the transparent ink composition was printed. After the printing, as a drying step, drying was performed under the conditions shown in Table 2, and metal foil (LUXOR (registered trademark), manufactured by KURZ JAPAN LTD.) was disposed on the printed surface and heat-pressed under the conditions shown in Table 2. Then, excess metal foil to which the ink composition was not attached and which was not adhered was peeled off from the fabric by hand, and the following evaluation was conducted.

In Table 2, the "landing time (reaction liquid-transparent ink) [sec]" represents the time from the landing of the reaction liquid to the landing of the transparent ink composition, and the "reaction liquid-transparent ink mixed liquid viscosity [mPa·s] represents the viscosity of an equal-amount mixed liquid of the reaction liquid and the transparent ink composition after 3 minutes from mixing. The viscosity is a viscosity (mPa·s) measured under an environment of 20°C using a viscoelasticity tester MCR-300 (product name, manufactured by Physica).

### 3. 3. Evaluation methods

### 3. 3. 1. Color developability

The degree of luster of the printed matter obtained by the ink jet recording method according to each of Examples and Comparative Examples was measured using a glossmeter (GM-268A, manufactured by Konica Minolta, Inc.), and color developability (degree of luster) was determined according to the following criteria. Results are shown in Table 2.

### Determination Criteria

AA: The degree of luster measured at 60° is 80 or more
A: The degree of luster measured at 60° is 50 or more and less than 80
B: The degree of luster measured at 60° is 20 or more and less than 50
C: The degree of luster measured at 60° is less than 20

### 3. 3. 2. Texture

The printed matter obtained by the ink jet recording method according to each of Examples and Comparative Examples was cut into a size of a size of 20 cm × 20 cm, and a tension-curvature curve was measured under conditions of a shear tension of 10 gf/cm and a shear angle of ±8° using a tensile and shear tester KE-S-FB1-A (product name, manufactured by KATO TECH CO., LTD.). The shear hardness [gf/(cm·deg)] was determined by linear regression in the curvature range of 0.5° to 2.5° in the measured tension-curvature curve. In addition, shear hardness of cotton fabric (Printstar 00085-CVT, the same as the fabric used in each Example) to which the reaction liquid composition and the ink composition were not applied was obtained in the same manner as in the printed textile described above. The absolute value of the difference between the shear hardness of the printed textile and the shear hardness of the cotton fabric was calculated, and the texture was evaluated according to the following evaluation criteria. Results are shown in Table 2.

### Determination Criteria

AA: The absolute value of the difference in shear hardness is 3.0 or less
A: The absolute value of the difference in shear hardness is more than 3.0 and 4.0 or less
B: The absolute value of the difference in shear hardness is more than 4.0 and 5.0 or less
C: The absolute value of the difference in shear hardness is more than 5.0

### 3. 3. 3. Rubbing fastness test (peeling of foil)

With respect to the printed matter obtained by the ink jet recording method according to each of Examples and Comparative Examples, rubbing fastness was evaluated based on the following criteria in accordance with a drying test defined in "test methods for color fastness to rubbing" in JIS L 0849. The test was conducted by a crockmeter method. Evaluation was carried out by determining the staining grade by a visual method according to JIS L 0801, item 10 (determination of color fastness) cited in JIS L 0849.
A: Rubbing fastness is grade 2-3 (intermediate grade) or higher and grade 3 or lower.
B: Rubbing fastness is grade 1-2 (intermediate grade) or higher and grade 2 or lower.
C: Rubbing fastness is grade 1 or lower.

### 3. 4. Evaluation results

As shown in Table 2, it was found that all images obtained in Examples involving the reaction liquid attaching step of attaching the reaction liquid containing the aggregating agent and water to the fabric by an ink jet method, the transparent ink attaching step of attaching the transparent ink composition containing the anionic resin particles and water to the fabric by an ink jet method, and the metal foil attaching step of attaching the metal foil to the region to which the transparent ink composition is attached, with the difference in landing time on the same region of the fabric in the reaction liquid attaching step and the transparent ink attaching step being within 60 seconds are excellent in color development and rubbing fastness.

The present disclosure includes a configuration substantially the same as the configurations described in the embodiments, for example, a configuration having the same function, method, and result, or a configuration having the same object and effect. In addition, the present disclosure includes configurations in which non-essential components of the configurations described in the embodiments are replaced. In addition, the present disclosure includes configurations that produce the same operational effects as those of the configurations described in the embodiments or configurations that can achieve the same objects as those of the configurations described in the embodiments. In addition, the present disclosure includes a configuration in which a known feature is added to the configurations described in the embodiments.

The following contents are derived from the above-described embodiments and modification examples.

The ink jet recording method includes: a reaction liquid attaching step of attaching a reaction liquid containing an aggregating agent and water to fabric by an ink jet method; a transparent ink attaching step of attaching a transparent ink composition containing water and anionic resin particles aggregated by the aggregating agent to the fabric by an ink jet method; and a metal foil attaching step of attaching metal foil to a region to which the transparent ink composition is attached, in which a difference in landing time on the same area of the fabric between the reaction liquid attaching step and the transparent ink attaching step falls within 60 seconds.

According to the ink jet recording method, a flat resin layer on the surface layer of the fabric can be formed by attaching the reaction liquid and the transparent ink composition to the same region of the fabric with a difference in landing time within 60 seconds. Consequently, the metal foil can be favorably attached, and a print having a metallic luster image with favorable color developability and rubbing fastness can be performed. In general, a surface of fabric is not smooth, and metal foil is less likely to adhere to the surface as it is, and since the surface is not smooth, metallic luster (color developability) is less likely to be exhibited. However, according to the ink jet recording method, the above-described effects can be obtained. Such an effect cannot be sufficiently obtained only by adjusting the attachment amount of the transparent ink composition, and it is considered that the effects are achieved by the difference in landing time on the same region of the fabric is within 60 seconds.

In the ink jet recording method, the difference in landing time on the same area of the fabric between the reaction liquid attaching step and the transparent ink attaching step may fall within 30 seconds.

According to the ink jet recording method, a print having a metallic luster image with further favorable color developability and rubbing fastness can be performed.

In the ink jet recording method, the reaction liquid attaching step and the transparent ink attaching step may be performed on the same region of the fabric in the same pass.

According to the ink jet recording method, a print having a metallic luster image with further favorable color developability and rubbing fastness can be performed.

The ink jet recording method may further include a drying step of drying the transparent ink composition after the transparent ink attaching step.

According to the ink jet recording method, moisture in the resin film formed by the transparent ink composition can be further dried, the concentration of the resin in the film is increased, and the adhesive force of the metal foil is increased. As a result, an image having more favorable color developability and fastness is obtained.

In the ink jet recording method, the metal foil attaching step may be performed by applying pressure and/or heat in a state in which the metal foil is in contact with the fabric.

According to the ink jet recording method, the resin of the transparent ink and the metal foil can be more firmly adhered to each other, and thus an image having more favorable fastness is obtained.

In the ink jet recording method, the transparent ink composition may be attached so that the amount of the anionic resin particles per unit area is 1 mg/inch² or more.

According to the ink jet recording method, transfer efficiency of the metal foil is improved, and an image having improved color developability is obtained.

In the ink jet recording method, the transparent ink composition may be attached so that the amount of the anionic resin particles per unit area is 40 mg/inch² or less.

According to the ink jet recording method, printed matter having more favorable texture is obtained.

In the ink jet recording method, the viscosity of a mixed liquid of the reaction liquid and the transparent ink composition may be 50 mPa·s or more.

According to the ink jet recording method, since the viscosity of the mixed liquid is high, a resin film is more favorably formed on the surface of the fabric.

In the ink jet recording method, the reaction liquid and the transparent ink composition may each have a viscosity of 3.0 mPa·s or more and 6.0 mPa·s or less.

According to the ink jet recording method, a higher definition image is easily formed.

In the ink jet recording method, the aggregating agent may be one or more selected from an organic acid and a polyvalent metal salt.

According to the ink jet recording method, printed matter having more favorable rubbing fastness can be obtained.

In the ink jet recording method, the anionic resin particles may be formed from one or more selected from a urethane resin, an acrylic resin, and a polyester resin.

According to the ink jet recording method, reactivity with the aggregating agent in the reaction liquid is more favorable, and adhesiveness with the fabric is also more favorable. The type of the resin may be selected depending on compatibility with the fabric. Further, in the case of a so-called hot-melt resin, the metal foil is more favorably attached through heating to a film-forming temperature or higher in the metal foil attaching step.

The ink jet recording method may further include a colored ink attaching step of attaching a colored ink composition containing anionic resin particles aggregated by the aggregating agent, a coloring material, and water to the fabric by an ink jet method.

According to the ink jet recording method, the colored ink composition has favorable reactivity with the aggregating agent in the reaction liquid, and an image having favorable adhesiveness with the fabric is obtained. In addition, the color tone of the image can be adjusted by the colored ink composition. This configuration is also preferable from the viewpoint of obtaining more favorable color developability.

In the ink jet recording method, the fabric may contain one or more selected from cotton, polyester, and polyurethane.

According to the ink jet recording method, even when unevenness is more likely to be caused after attachment of the transparent ink composition and the metal foil is less likely to be transferred due to fast penetration of the ink into the fabric, recorded matter with favorable metallic luster is obtained.

## Claims

1. An ink jet recording method, comprising:
a reaction liquid attaching step of attaching a reaction liquid containing an aggregating agent and water to fabric by an ink jet method;
a transparent ink attaching step of attaching a transparent ink composition containing water and anionic resin particles aggregated by the aggregating agent to the fabric by an ink jet method; and
a metal foil attaching step of attaching metal foil to a region to which the transparent ink composition is attached, wherein
a difference in landing time on the same area of the fabric between the reaction liquid attaching step and the transparent ink attaching step falls within 60 seconds.

2. The ink jet recording method according to claim 1, wherein
the difference in landing time on the same area of the fabric between the reaction liquid attaching step and the transparent ink attaching step falls within 30 seconds.

3. The ink jet recording method according to claim 1, wherein
the reaction liquid attaching step and the transparent ink attaching step are performed on the same region of the fabric in the same pass.

4. The ink jet recording method according to claim 1, further comprising
a drying step of drying the transparent ink composition after the transparent ink attaching step.

5. The ink jet recording method according to claim 1, wherein
the metal foil attaching step is performed by applying pressure and/or heat in a state in which the metal foil is in contact with the fabric.

6. The ink jet recording method according to claim 1, wherein
the transparent ink composition is attached so that an amount of the anionic resin particles per unit area is 1 mg/inch² or more.

7. The ink jet recording method according to claim 1, wherein
the transparent ink composition is attached so that an amount of the anionic resin particles per unit area is 40 mg/inch² or less.

8. The ink jet recording method according to claim 1, wherein
a viscosity of a mixed liquid of the reaction liquid and the transparent ink composition is 50 mPa·s or more.

9. The ink jet recording method according to claim 1, wherein
the reaction liquid and the transparent ink composition each have a viscosity of 3.0 mPa·s or more and 6.0 mPa·s or less.

10. The ink jet recording method according to claim 1, wherein
the aggregating agent is one or more selected from an organic acid and a polyvalent metal salt.

11. The ink jet recording method according to claim 1, wherein
the anionic resin particles are formed from one or more selected from a urethane resin, an acrylic resin, and a polyester resin.

12. The ink jet recording method according to claim 1, further comprising
a colored ink attaching step of attaching a colored ink composition containing anionic resin particles aggregated by the aggregating agent, a coloring material, and water to the fabric by an ink jet method.

13. The ink jet recording method according to claim 1, wherein
the fabric contains one or more selected from cotton, polyester, and polyurethane.
